# EUROPEAN PATENT APPLICATION

(11) **EP 0 995 358 A1**
(43) Date of publication of application: **26.04.2000**
(21) Application number: 99830661.7
(22) Date of filing: 20.10.1999
(51) Int. Cl.: A21C 11/16

(54) **New design of die for pasta for food purposes**

(30) Priority: 23.10.1998 IT BO980123 U
(71) Applicant: Celsi Giampietro, 47100 Forli' (IT)
(72) Inventor: Celsi Giampietro, 47100 Forli' (IT)
(74) Representative: Trentini, Ermanno, Ing.

(57) **Abstract**

This invention concerns a specially shaped and sized die for pasta for food purposes, characterised by the fact that the front extrusion openings (2) make up a continuously grooved net around the inserted cores (3), so that it forms a small pasta pie with honey comb (7) structure with variously shaped pits as is variable also the general arrangement of the same pits that establish the peripheral shape of the pasta pie (1).

## Description

This invention refers to a die for pasta for food purposes of routine technology, capable however of "forming" a product with absolutely new characteristics that clearly stands out, thanks to style and dimensions, amongst traditional types of short cut pasta produced up to date.

This die, manufactured with a normally circle-shaped peripheral profile and employing usual materials for this type of achievement, is characterised by the shape of the holes and their inner cores and by the diameter, from 8 to 14 centimetres that allow it to extrude a joined pasta pie with various surrounding shape, with "honey comb" structure, unusually sized compared to the present type of pasta which is characterised by a much smaller diameter.

These and other features will presently be further in relation to a simple design shape of the invention given purely as an indication and which does not restrict the scope of this patent, with reference to the drawings enclosed in which:
Figure 1 is the die subject of this patent seen from the front.

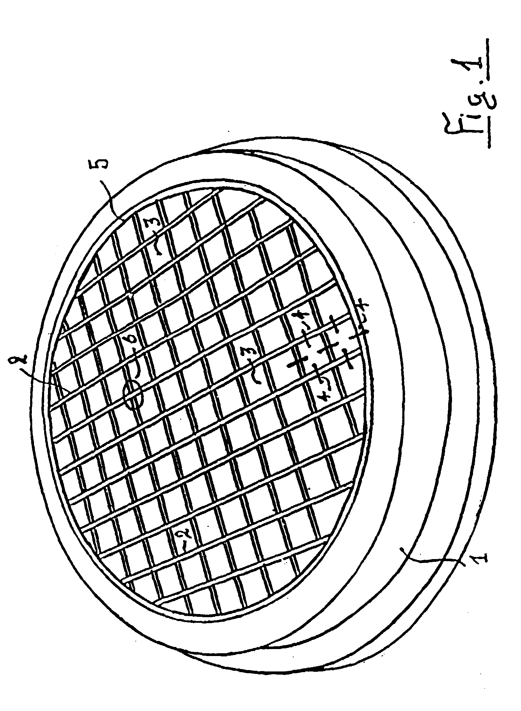

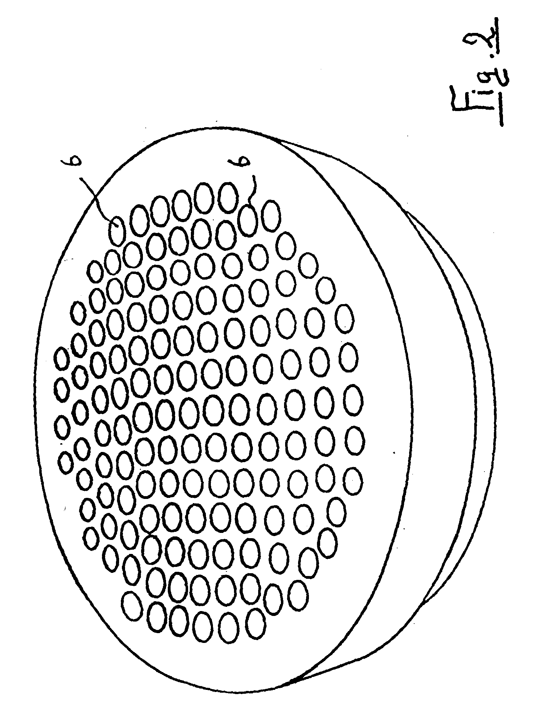

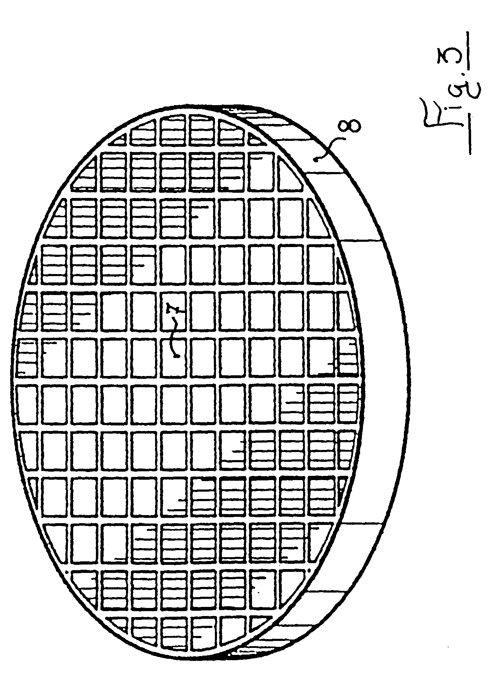

Figure 2 is the rear view.
Figure 3 is the pie extruded from this die.

With reference to these figures, 1 indicates the circular peripheral rim with the clamp locators for the horizontal press on which it will be fitted, 2 the extrusion openings, in this square-shaped design, making up a net with continuously grooved square meshes which are crucial for the joining of the outer surfaces of the pits that form the honey comb type structure of the pie, 3 the square cores joined together and to the circular outer rim by means of small pins 4, 5 the peripheral chamber, in this annular-shaped design, that makes up the borders of the pie, 6 the holes for lightening the pressure of the mix obtained at the back of the die near the corners of the inserted cores, 7 the honey comb structure of the pie, slightly convex in the middle, 8 the continuous peripheral rim (cut to size by special rotating blades) that surrounds the pie which, being made with through holes, must be closed at the bottom, for example with a cardboard plate in order to contain the sauce during the processing phase, added from the top and firmly contained in the pits.

In practice the special design, dimensions, materials, shape and other details of this invention, may in any event vary though remaining within the scope of this patent-right. This invention, thus conceived is indeed open to a variety of modifications and variants which are within the scope all part of the invention concept. Furthermore, all the elements may be replaced by other technically equivalent ones.

## Claims

1. NEW DESIGN OF DIE FOR PASTA FOR FOOD PURPOSES
consisting in the traditional solid casing, made in copper or bronze, characterised at the front by a number of square-shaped extrusion openings (2) in this type of design that as a whole make up a continuously grooved net, within which the inserted cores (3), being also square-shaped, are joined together by small pins (4) that connect also the outer circular rim (1) which borders the annular peripheral chamber (5).

2. NEW DESIGN OF DIE FOR PASTA FOR FOOD PURPOSES
according to the main claim, characterised by the fact that the back part of the die is provided with some circular shaped holes (6) near the corners of the cores to lighten the pressure of the mix.

3. NEW DESIGN OF DIE FOR PASTA FOR FOOD PURPOSES
according to the main claim, characterised by the fact that the outside diameter measures from 8 to 14 centimetres and consequently the extruded pie is much larger than any type of short cut pasta currently sold.

4. NEW DESIGN OF DIE FOR PASTA FOR FOOD PURPOSES
according to the main claim, characterised by the fact that the surrounding ring (1) of the die is provided with some clamp locators for the horizontal press on which it will be fitted.

5. NEW DESIGN OF DIE FOR PASTA FOR FOOD PURPOSES
according to the main claim, characterised by the fact that the openings (2) and consequently the cores (3), in their inner part, may be of various shapes to generate honey comb type extruded structures, with variously shaped pits, circular, oval or other, as may the outer perimeter of the pie take on any kind of overall shape.
